# EUROPÄISCHE PATENTSCHRIFT

(11) **EP 3 394 658 B1**
(45) Veröffentlichungstag und Bekanntmachung des Hinweises auf die Patenterteilung: **15.06.2022**
(21) Anmeldenummer: 16820152.3
(22) Anmeldetag: 14.12.2016
(51) Int. Cl.: G02B 26/08, B60Q 1/08, F21S 41/16, F21S 45/43, F21S 41/176

(54) **SCHEINWERFER FÜR FAHRZEUGE**
VEHICLE HEADLIGHT
PROJECTEUR POUR VÉHICULES

(30) Priorität: 21.12.2015 AT 510852015
(43) Veröffentlichungstag der Anmeldung: 31.10.2018
(73) Patentinhaber: ZKW Group GmbH, 3250 Wieselburg (AT)
(72) Erfinder: BAUER, Friedrich, 3252 Bergland (AT); REISINGER, Bettina, 3300 Amstetten (AT)
(74) Vertreter: Patentanwaltskanzlei Matschnig & Forsthuber OG
(86) Internationale Anmeldenummer: PCT/AT2016/060127
(87) Internationale Veröffentlichungsnummer: WO 2017/106892

(56) Entgegenhaltungen:
- US-A1- 2011 249 460
- US-A1- 2014 029 282

## Beschreibung

Die Erfindung bezieht sich auf einen Scheinwerfer für Fahrzeuge, mit zumindest einer modulierten Laserlichtquelle, deren Laserstrahl mittels zumindest eines Mikrospiegels scannend auf ein Lichtkonversionsmittel lenkbar ist, um an diesem ein Leuchtbild zu erzeugen, welches über eine Abbildungsoptik als Lichtbild auf die Fahrbahn projiziert wird, wobei der zumindest eine Mikrospiegel durch eine Ansteuerung in zumindest einer Koordinatenrichtung verschwenkbar ist, sowie mit einer Laseransteuerung und einer dieser und der Spiegelansteuerung zugeordneten Recheneinheit.

Scheinwerfer, die mit über ein Lichtkonversionsmittel scannenden Laserstrahlen arbeiten, sind bekannt. Sie erzeugen üblicherweise ein Leuchtbild auf einem Lichtkonversionsmittel, oft kurz "Phosphor" genannt, auf welchem durch Fluoreszenz das z.B. blaue Laserlicht in im Wesentlichen "weißes" Licht umgewandelt wird. Das Lichtkonversionsmittel hat meist die Form eines Plättchens, wobei nach dem Auflicht- oder dem Durchlichtprinzip gearbeitet werden kann. Im ersten Fall (Auflicht) wird das konvertierte Licht an derselben Seite abgestrahlt, auf welcher der Laserstrahl auftrifft, im zweiten Fall (Durchlicht) wird das konvertierte Licht an jener Seite abgestrahlt, welche der von dem Laser gescannten Seite gegenüberliegt. In beiden Fällen kann das genutzte Leuchtbild auch aus einer Mischung des z.B. blauen Laserlichtes mit dem konvertierten Licht bestehen, um ein möglichst "weißes" Licht zu erhalten.

Das erzeugte Leuchtbild wird dann mit Hilfe des Abbildungssystems, z.B. einer Linsenoptik, auf die Fahrbahn projiziert. Der Lichtscanner oder das Strahlablenkmittel ist im Allgemeinen ein Mikrospiegel, der um eine oder um zwei Achsen bewegt werden kann. Durch diese Bewegung des Mikrospiegels wird dessen Spiegelnormalen-Richtung entlang zumindest einer Koordinatenrichtung verändert, sodass z.B. ein zeilenweises Leuchtbild auf dem bzw. in dem Lichtkonversionsmittel "geschrieben" wird. Die Modulation der Laserlichtquelle bestimmt für jeden Punkt oder jede Zeile des Leuchtbildes die gewünschte Leuchtdichte, die einerseits gesetzlichen Vorgaben für das projizierte Lichtbild entsprechen muss und andererseits der jeweiligen Fahrsituation angepasst werden kann.

Die Verwendung des Lichtscanners mit einem oder mehreren Laserstrahlen, welche synchron zu der Spiegelschwingung moduliert werden, ermöglicht es, eine nahezu beliebige Lichtverteilung zu erzeugen. Bekannt ist ein solches Verfahren prinzipiell auch bei sogenannten Pico Projektoren und Head-up-Displays, die gleichfalls Lichtscanner verwenden, die als MEMS (Mikro-Elektro-Mechanische-Systeme) ausgebildet sind. Im Gegensatz zu solchen Projektionssystemen, die oft in der Unterhaltungselektronik eingesetzt werden, müssen jedoch bei Scheinwerfern deutlich höhere Laserleistungen eingebracht werden, wobei es nicht notwendig ist, eine farbige Lichtverteilung darzustellen. Wie oben erwähnt, wird üblicherweise mit blauem Laserlicht, das beispielsweise von Laserdioden stammt, gearbeitet. Im Hinblick auf die benötigte hohe Laserleistung in der Größenordnung von 5 bis 30 Watt, ist es wichtig, die in einem Kraftfahrzeugscheinwerfer installierte Laserleistung bestmöglich zu nützen.

Bekannte Scheinwerfer der gegenständlichen Art scannen im Prinzip über ein rechteckförmiges Feld des Lichtkonversionsmittels, wobei meist horizontale Zeilen geschrieben werden. Beispielsweise ist aus der EP 2 063 170 A2 ein Scheinwerfer der eingangs genannten Art bekannt geworden, bei welchem zur Ausleuchtung der Fahrbahn mit einem blendfreien adaptiven Fernlicht bestimmte Bereiche in Abhängigkeit von anderen Verkehrsteilnehmern bzw. in Abhängigkeit von Umgebungsparametern, wie Eigengeschwindigkeit; Stadt/Freiland/Autobahn, Wetter, Dämmerung etc. ausgespart werden können. Der Strahl eines Lasers wird über einen in zwei Raumrichtungen bewegbaren Mikrospiegel auf eine Leuchtfläche gelenkt, die zur Konvertierung des Laserlichtes in vorzugsweise weißes Licht einen Phosphor enthält. Mittels einer Linse wird das Leuchtbild der Leuchtfläche auf die Fahrbahn projiziert.

Die Dokumente US2011249460 A1 und EP2690352 A1 offenbaren Scheinwerfer gemäß dem Oberbegriff von Anspruch

Es hat sich gezeigt, dass für die Beleuchtung des Fahrbahnraumes die Anwendung eines polaren Koordinatensystems, bei welchem die optische Achse des Scheinwerfers Ausgangspunkt ist, gewisse Vorteile hätte, da sich der Bildraum vor dem Fahrzeug im Prinzip als Zentralperspektive darstellen lässt. Demnach ist es eine Aufgabe der Erfindung, einen Scheinwerfer einer solchen Bauart zu schaffen, welche eine einfache Skalierung der Lichtleistung um die optische Achse zu ermöglichen.

Die Erfindung wird durch Anspruch 1 definiert.

Diese Aufgabe wird mit einem Scheinwerfer der eingangs genannten Art gelöst, bei welchem erfindungsgemäß eine Anzahl von Laserlichtquellen vorgesehen ist, welche in Abstand von der optischen Achse der Abbildungsoptik um diese Achse herum verteilt angeordnet sind, jeder Laserlichtquelle ein Mikrospiegel zugeordnet ist, wobei der Laserstrahl jeder Laserlichtquelle über den zugeordneten Mikrospiegel auf das zumindest eine Lichtkonversionsmittel gelenkt ist, um auf diesem das Leuchtbild zu erzeugen, und die Mikrospiegel derart um zumindest eine Achse schwingen, dass jeder Laserstrahl eine Scanbewegung in radialer Richtung auf dem Lichtkonversionsmittel ausführt, wobei die Mikrospiegel resonant schwingen und ihre Umkehrpunkte einem gewünschten Bereich hoher Lichtstärke im Leuchtbild, insbesondere im Zentrum, zugeordnet sind, sodass auf diesem ein Leuchtbild aus einzelnen Kreissektoren eines polaren Koordinatensystems geschrieben wird, dessen Ursprung auf der optischen Achse der Abbildungsoptik liegt, wobei die Anzahl der Sektoren jener der Laserlichtquellen bzw. der Mikrospiegel entspricht und jedem Sektor eine Laserlichtquelle zugeordnet ist.

Dank der Erfindung erhält man einen Scheinwerfer, der von besonders kompakt Bauart ist und dessen Lichtbild in sehr flexibler Weise den jeweiligen Erfordernissen angepasst werden kann. Da in den Umkehrpunkten mehr Laserleistung in den Phosphor eingebracht wird, erhält man auch eine höhere Lichtausbeute.

Eine besonders praxistaugliche Lösung sieht vor, dass die Grenzen der Sektoren an Linien, z.B. Hell-Dunkel-Grenzverlauf oder Straßenränder im Verkehrsraum angepasst sind.

Eine sehr vorteilhafte Konstruktion zeichnet sich dadurch aus, dass die Laserlichtquellen entlang eines Kreises, vorzugsweise rotationssymmetrisch bezüglich der optischen Achse angeordnet sind.

Gemäss der Erfindung sind sechs Laserlichtquellen vorgesehen.

Eine andere Konstruktionsvariante zeichnet sich zweckmäßigerweise dadurch aus, dass die Laserlichtquellen in einer zwangsgekühlten, vorzugsweise ringförmigen Halterung angeordnet sind.

Besonders vorteilhaft ist es weiters, wenn das Lichtkonversionsmittel zentral, im Bereich der optischen Achse angeordnet ist.

Sehr zweckmäßig kann es weiters sein, falls die Laserspotgröße im Zentrum des Leuchtbildes kleiner ist als für Bereiche mit größerem radialen Abstand von der optischen Achse.

Bei einer zweckmäßigen Ausbildung ist weiters vorgesehen, dass im Strahlengang zwischen den Laserlichtquellen und den Mikrospiegeln zumindest ein ortsfester Reflektor angeordnet ist.

Falls das Lichtkonversionsmittel von der Bauart des Durchlichtprinzips ist, ergeben sich weitere Vorteile, beispielsweise in Hinblick auf die Erzeugung von Mischlicht aus Laserlicht und konvertiertem Licht.

Im Sinne einer hohen Sicherheit kann es zweckmäßig sein, wenn innerhalb eines Gehäuseabschnittes des Scheinwerfers zumindest eine Strahlenfalle für das Lichtkonversionsmittel unbeabsichtigt durchsetzende Laserstrahlen vorgesehen ist.

Zur Erhöhung der Flexibilität der Lichtbildgestaltung ist es vorteilhaft, falls jeder modulierten Laserlichtquelle eine dynamische Optik mit variabler Brennpunktlage zur gesteuerten Veränderung des Strahlquerschnitts nachgeordnet ist.

Falls das Lichtkonversionsmittel strukturiert ist und mehrere, durch ein absorbierendes Material voneinander getrennte Phosphorelemente enthält, kann man eine weitere Verbesserung der Lichtbildqualität erzielen.

Die Erfindung ist im Folgenden anhand beispielsweiser Ausführungsformen anhand der Zeichnung veranschaulicht, in welcher zeigen
Fig. 1 einen schematischen Schnitt längs der optischen Achse durch einen Scheinwerfer nach der Erfindung,
Fig. 2 einen Schnitt nach der Linie II-II in Fig. 1,
Fig. 3 drei Möglichkeiten einer Strukturierung des Lichtkonversionsmittels,
Fig. 4 ein beispielsweises Lichtbild, das von einem Scheinwerfer nach der Erfindung erzeugt wird,
Fig. 5 in einer schematischen Darstellung ähnlich wie Fig. 1 eine andere Ausführungsform eines erfindungsgemäßen Scheinwerfers samt einer schematisch dargestellten Ansteuerung und
Fig. 6 in einer schematischen Darstellung ähnlich wie Fig. 5 eine weitere Ausführungsform eines Scheinwerfers nach der Erfindung.

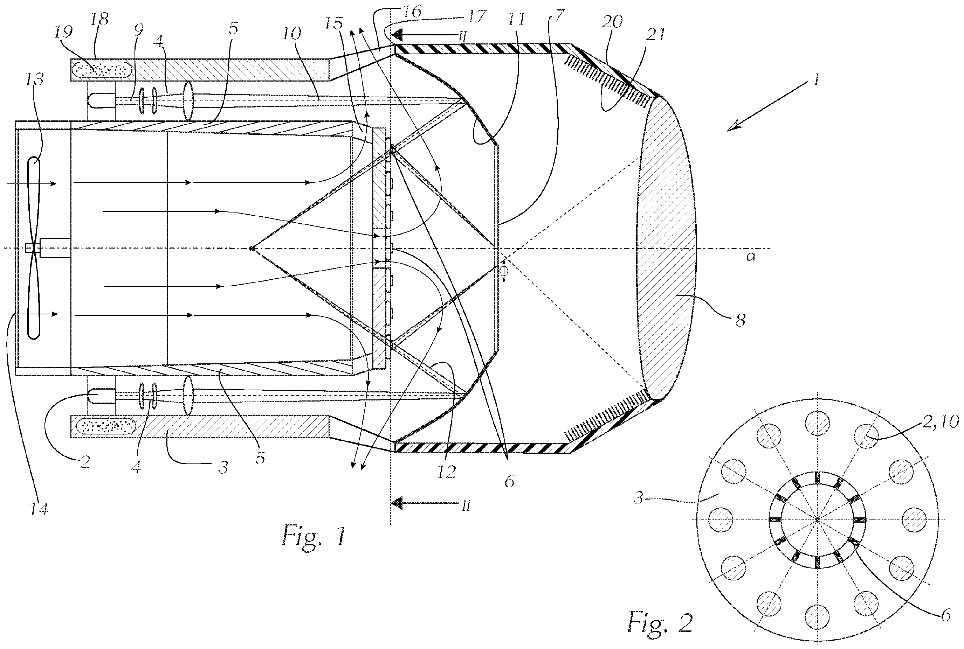

Unter Bezugnahme auf **Fig. 1** wird ein Ausführungsbeispiel der Erfindung näher erläutert. Insbesondere sind die für einen erfindungsgemäßen Scheinwerfer wichtigen Teile dargestellt, wobei es klar ist, dass ein KFZ-Scheinwerfer noch viele andere Teile enthält, die seinen sinnvollen Einsatz in einem Kraftfahrzeug, wie insbesondere einem PKW oder LKW bzw. Motorrad, ermöglichen und auch weitere Beleuchtungs- und Signallichtfunktionen erzeugen können. Bevor auf die Funktion des in Fig. 1 dargestellten Scheinwerfers 1 und die Zusammenarbeit seiner wesentlichen Teile eingegangen wird, seien zunächst diese angeführt. Im vorliegenden Fall sind lichttechnischer Ausgangspunkt des Scheinwerfers zwölf Laserlichtquellen, nämlich hier Laserdioden 2 in einer Halterung 3 im hinteren Bereich des Scheinwerfers angeordnet, wobei jeder Laserdiode eine zumeist mehrstufige Optik 4, hier bestehend aus drei Linsen, nachgeordnet ist. Im vorliegenden Fall wird die Laserstrahlung jeweils mit Laserdioden erzeugt und daher wird dieser Begriff stellvertretend und gleichbedeutend für "Laserlichtquellen" verwendet. Es sollte jedoch klar sein, dass Laserstrahlung auch auf andere Weise, wie z.B. mittels Festkörperlasern erzeugt werden kann. Die Laserdioden 2 strahlen nach vorne durch die Optik 4 ab, wobei die Begriffe "vorne" und hinten in ihrer üblichen Bedeutung im Zusammenhang mit einem Kraftfahrzeug und seiner Fahrtrichtung zu sehen sind. Die Anordnung der Laserdioden 2, die bevorzugt symmetrisch um die optische Achse a des Systems ist, geht auch gut aus Fig. 2 hervor. In diesem Beispiel liegen die Laserdioden auf einem Kreis in Winkelabständen von 30°. Die Laserdioden könnten aber beispielsweise auch gegeneinander versetzt auf zwei konzentrischen Kreisen unterschiedlichen Durchmessers liegen. Auch könnten sie unterschiedliche Winkelabstände zueinander aufweisen.

Die tatsächlich verwendete Anzahl von Laserdioden hängt von den Anforderungen an die Auflösung vor allem im Vorfeld des Lichtbildes ab, wobei auch mehr als zwölf Laserdioden eingesetzt werden können. Im Allgemeinen werden zumindest sechs Laserdioden verwendet.

sei, dass jede Laserlichtquelle auch zwei oder mehr einzelne Laserdioden aufweisen kann, deren Licht z.B. über Spiegel oder Prismen zu einem einzigen Strahl zusammengefügt wird.

Weiters sind an dem vorderen Ende eines hohlzylindrischen Teils 5 entsprechend der Anzahl der Laserdioden 2 zwölf Mikrospiegel 6, auch MEMS genannt, vorgesehen. Vor den Mikrospiegeln 6 liegt zentral ein Lichtkonversionsmittel 7 in Form eines mit einem Phosphor zur Lichtkonversion versehenen durchscheinenden Blättchens und am vorderen Ende des Scheinwerfers 1 ist eine Abbildungsoptik 8, hier als bikonvexe asphärische Linse ausgebildet, angeordnet.

In Fig. 1 ist ein beispielsweiser Strahlengang für die von den Laserdioden 2 abgegebenen Laserstrahlen eingezeichnet. Man erkennt, dass beispielsweise der primäre Laserstrahl 9, welcher von der obersten Laserdiode 2 ausgeht, zunächst die Optik 4 durchsetzt. Diese Optik dient zur Strahlformung und fokussiert oder auch defokussiert in gewünschter Weise den Strahl, wobei die Optik 4 auch "dynamisch" ausgebildet sein kann, d.h. angesteuert die Brennweite verändern kann. Die einzelnen Laserstrahlen, hier zwölf, können im einfachsten Fall gleichen Strahlquerschnitt aufweisen, doch ist es in vielen Fällen sinnvoll, unterschiedliche Strahlquerschnitte einzusetzen, um das Leucht- bzw. Lichtbild flexibler gestalten zu können. Die Optiken 4 können auch als hauptsächlich zur Laserstrahlformung eingesetzte, diffraktive optische Elemente, kurz DOE genannt, ausgebildet sein.

Der die Optik 4 verlassende sekundäre Laserstrahl 10 verläuft nach vorne und wird an einem ortsfesten parabolischen Reflektor 11, der nicht notwendigerweise einstückig sein muss und statt parabolisch auch freiförmig gestaltet sein könnte, wobei auch statt einem mehrere Reflektoren vorhanden sein könnten, zu dem zugeordneten Mikrospiegel 6 gelenkt und von diesem als tertiärer Laserstrahl 12 auf das Lichtkonversionsmittel, auf welchem das im Allgemeinen blaue, gegebenenfalls auch ultraviolette Licht der Laserdioden 2 in sichtbares Licht umgewandelt wird. Dadurch entsteht auf dem Lichtkonversionsmittel 7 ein Leuchtbild, welches von der Abbildungsoptik 8 als Lichtbild auf die Straße projiziert wird. Wenngleich bei dem gezeigten Beispiel die Abbildungsoptik 8 als einfache asphärische Linse dargestellt und beschrieben ist, ist es für den Fachmann klar, dass auch andere Bauarten der Abbildungsoptik angewendet werden können, wie beispielsweise eine Kombination eines Spiegels mit einer Linse oder ein mehrstufiges Linsensystem.

Die Mikrospiegel 6 können um zumindest eine Achse schwingen, nämlich so, dass sie auf dem Lichtkonversionsmittel 7 einen Scan, vom optischen Zentrum ausgehend nach außen und zurück, somit in radialer Richtung durchführen können. Durch den Überlapp mehrerer Scanvorgänge entstehen um das Zentrum Bestrahlungsstärken-Maxima in Übereinstimmung mit den Anforderungen an Lichtverteilungen. Andererseits ist es auch möglich, dass die Mikrospiegel 6 zusätzlich um eine zweite Achse eine Schwenkbewegung durchführen, so dass auch ein Scannen normal zur ersten Scanrichtung möglich ist. In einem solchen Fall kann beispielweise ein Sektor mit einem trapezförmigen Streckenzug überstrichen werden.

Der Scheinwerfer 1 nach der Erfindung kann weiters eine Kühlung in Form eines Lüfters 13, der gegebenenfalls mit einem Luftfilter 14 versehen ist, aufweisen, welcher durch den hohlzylindrischen Teil 5 Kühlluft vom hinteren Ende entsprechend den eingezeichneten Pfeilen nach vorne bläst, wobei diese Kühlluft durch seitliche Öffnungen 15 am Ende des hohlzylindrischen Teils 5 aus diesem austreten und weiters entsprechend eingezeichneter Pfeile auch durch Öffnungen 16 eines Gehäuses 17 austreten kann. Diese Kühlluft dient in erster Linie zur effektiven Kühlung der Mikrospiegel 6 bzw. deren Ansteuerungen, darüber hinaus zur Verminderung der thermischen Belastung des Lichtkonversionsmittels 7, jedoch auch zur Kühlung der Laserdioden 2. Für diese Laserdioden 2 kann eine weitere Kühlung in einem Gehäuseabschnitt 18 vorgesehen sein, der gegebenenfalls auch eine Flüssigkeitskühlung mit einer Kühlflüssigkeit in einem Hohlraum 19 besitzen kann. Auf diese Weise ist die Halterung 3 der Laserdioden 2 durch Belüftung und/oder Flüssigkeit zwangsgekühlt.

Man erkennt weiters, dass in einem Gehäuseabschnitt 20 an dessen Innenseite im Bereich der Abbildungsoptik 8 eine Strahlenfalle 21 vorgesehen ist, welche als passive, d.h. ohne gesteuerte Abschaltung einer Laserlichtquelle, Sicherheitseinrichtung dient, falls das Lichtkonversionsmittel 7 bzw. dessen Phosphor beschädigt sind und Laserstrahlen durchtreten und den Scheinwerfer verlassen. Die Laserstrahlen treffen in einem solchen Störfall auf der strahlungsabsorbierend ausgebildeten Strahlenfalle 21 auf, wodurch eine allfällige Verletzungsgefahr, insbesondere der Netzhaut von Personen, durch gestreutes oder reflektiertes Laserlicht vermieden wird. Im dargestellten Bereich der Strahlenfalle, die hier rundumlaufend ausgebildet ist, kann zusätzlich oder alternativ zumindest ein Sensor vorgesehen sein, um bei unerwünschten Austreten von Laserstrahlung z.B. über eine Ansteuerung die Laserdioden aktiv abzuschalten.

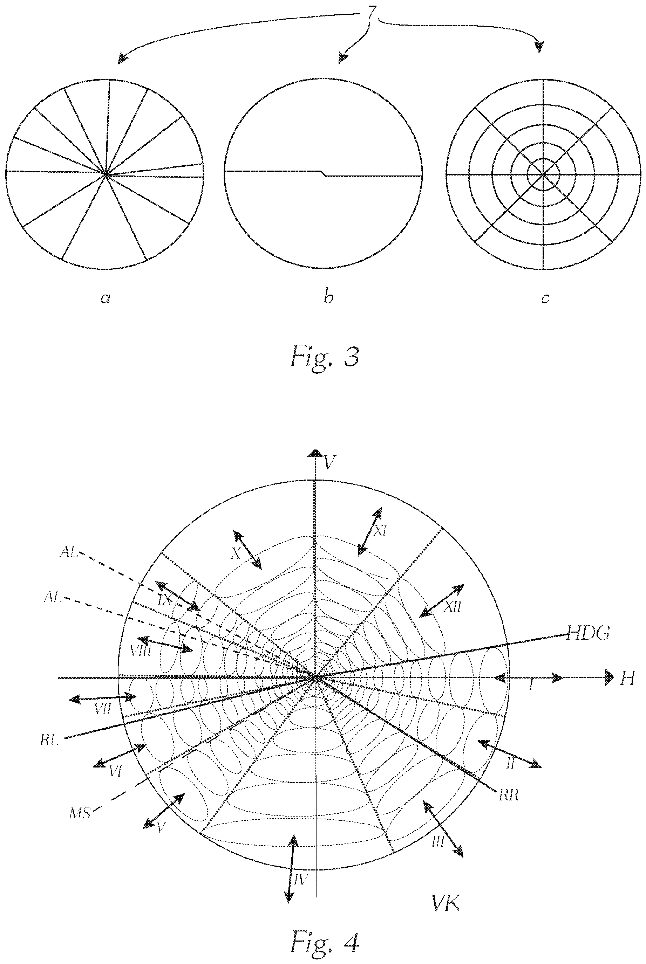

Bezüglich des Lichtkonversionsmittels ist anzumerken, dass dieses vorzugsweise ein kreisrundes Plättchen ist und gleichförmig, d.h. unstrukturiert, isotrop bzw. homogen, sein kann. Ein Problem beim Einsatz von Phosphoren für Anwendungen die einen hohen Kontrast erfordern ist jedoch immer das Überstrahlen, d.h. dass am Phosphor nicht nur die mit dem Laserstrahl beleuchtete Stelle leuchtet, sondern durch Streueffekte auch die nähere räumliche Umgebung des Plättchens. Um einen besseren Kontrast zu erreichen, besteht die Möglichkeit, anstelle eines großen durchgehenden Phosphors bzw. Plättchens mehrere kleine Phosphorelemente zu verwenden, die durch ein absorbierendes Material voneinander getrennt sind. Die trennende Schicht zwischen den einzelnen Elementen muss dabei so schmal wie möglich sein, damit sie in dem Lichtbild auf der Straße nicht störend wahrgenommen wird. Eine Strukturierung kann beispielsweise in Form von Kreisringen und/oder Sektoren des den Phosphor enthaltenden Plättchens vorgenommen werden, was in Fig. 3a und c gezeigt ist. Auch ist gemäß Fig. **3b** eine einfache Trennung zwischen den Bereichen einer abgeblendeten und einer aufgeblendeten Lichtverteilung entsprechend der Hell-Dunkel-Grenze des Abblendlichtes auf dem Lichtkonversionsmittel 7 bzw. Plättchen möglich.

Für unterschiedliche Lichtfunktionen können auch unterschiedliche Phosphore verwendet werden, beispielsweise für den Abblendlichtbereich ein Phosphor mit besserem Kontrastverhalten, und für Fernlicht ein Phosphor mit besserer Konvertierungseffizienz, ähnlich der Struktur nach Fig. 3b.

Ein Beispiel eines mit dem beschriebenen Scheinwerfer erzielbaren Lichtbildes ist in Fig. 4 dargestellt. Das Lichtbild ist die Projektion des auf den Phosphor gescannten Leuchtbildes und man erkennt in jedem der zwölf Sektoren die scannenden Lichtflecke, die im gezeigten Beispiel von elliptischer Form sind. Ihre Größe nimmt bei diesem Beispiel in Richtung auf das Zentrum ab. Die Formgebung der Leuchtflecke erfolgt einerseits durch die jeder Laserlichtquelle, hier Laserdiode 2 zugeordneten Optiken 4, andererseits durch den Umstand, dass das Lichtkonversionsmittel 7 meist eben ausgebildet ist, sodass weiter vom Zentrum, das dem Fluchtpunkt der Zentralperspektive des Verkehrsraumes zugeordnet ist, entfernt auftreffende Laserspots verbreitert werden, und schließlich hängt die Form der Leuchtflecke oder Spots auch von der Geometrie des Reflektors 11 ab. Falls die Optiken 4 dynamisch veränderbar sind, kann man auch auf diese Weise den Fokus der Laserstrahlen zentral kreisförmig scharf und radial weiter außen elliptisch "unscharf" gestalten.

Der Mikrospiegel kann nach dem resonanten Antriebsprinzip arbeiten, bei welchem die Verweildauer eines Spiegels in einer Extremlage, d.h. einem Umkehrpunkt der Bewegung, größer ist als in der Mittenlage. Daher wird in dieser Stellung mehr Laserleistung in den Phosphor eingebracht, was zu einer höheren Lichtausbeute führt. Da im Zentrum einer Lichtverteilung im Allgemeinen höhere Lichtstärken bzw. Beleuchtungsstärken gefordert sind, kann vorteilhafter Weise die Ausrichtung des Spiegels derart gewählt werden, dass der Laserstrahl insbesondere auf die zentrale Mitte ausgerichtet ist. Alternativ kann der Laserstrahl auf die beabsichtigte Position des Lichtstärke-Maximums im Lichtbild ausgerichtet sein.

Weiters ist es möglich, in jedem einzelnen der hier zwölf Sektoren oder optischen Pfaden eine besondere Strahl- bzw. Leuchtfleckform zu verwenden, z.B. für den Vorfeldbereich des Lichtbildes mehr elliptisch bis linienförmig und im Fernlichtbereich kreisförmig fokussiert.

In Fig. 4 sind die polar aufgeteilten Sektoren den einzelnen Laserdioden bzw. Laserlichtquellen zugeteilt und mit den römischen Zahlen I bis XII bezeichnet. Das diesem Lichtbild im Verkehrsraum entsprechende Leuchtbild auf dem Lichtkonversionsmittel sieht sinngemäß jedoch auf dem Kopf stehend aus. Dabei kommt den einzelnen Sektoren - im vorliegenden Beispiel einer Lichtverteilung - die folgende Bedeutung zu:
I Asymmetrieanstieg (15°)
II Bankett - rechter Fahrbahnrand
III,IV,V eigene Straßenhälfte
VI linke Straßenseite
VII Bankett - linker Fahrbahnrand
VIII Augenlinie PKW-Lenker
IX Augenlinie LKW-Lenker
X,XI,XII Fernlicht-Ausleuchtung

In der Zeichnung bedeuten VK den Verkehrsraum, RR den rechten Rand, RL den linken Rand, MS den Mittelstreifen der Fahrbahn, HDG die Hell-Dunkel-Grenze und AL die Augenlinien.

Auf Fig. 4 erkennt man auch, dass die den einzelnen Laserdioden zugeordneten Sektoren I bis XII keinesfalls gleich groß sein müssen - weder bezüglich der Winkelausdehnung noch bezüglich der radialen Ausdehnung.

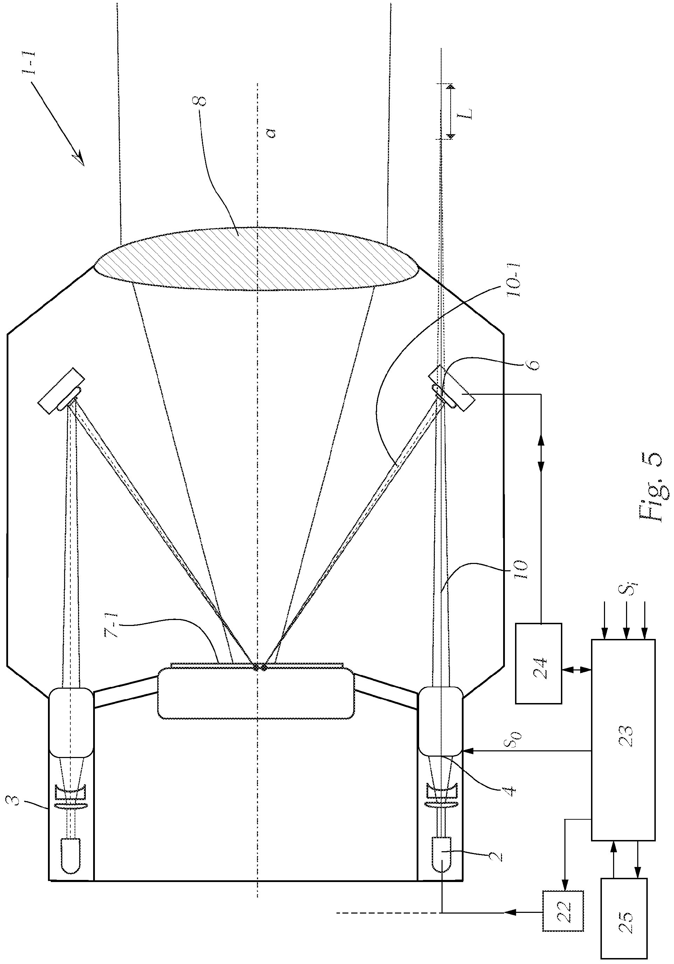

In Fig 5 ist schematisch dargestellt, dass die Erfindung auch anwendbar ist, wenn in einem Scheinwerfer 1-1 ein mit "Auflicht" arbeitendes Lichtkonversionsmittel 7-1 angewendet wird. Für gleiche oder gleichartige Teile werden dabei gleiche Bezugszeichen verwendet. Man erkennt, dass der Aufbau des Scheinwerfers 1-1 jenem nach der Fig. 1 ähnlich ist, doch verlaufen die sekundären Laserstrahlen 10 der Laserdioden 2 unmittelbar zu den Mikrospiegeln 6, wobei diese Mikrospiegel etwa an den Stellen sitzen, an welchen nach Fig. 1 die sekundären Laserstrahlen durch den Reflektor 11 oder die Reflektoren umgelenkt werden. Von den Mikrospiegeln gelangt nun je ein sekundärer Laserstrahl 10-1 zu dem Lichtkonversionsmittel 7-1, dessen Leuchtbild wiederum mit Hilfe der Abbildungsoptik 8 als Lichtbild in den Verkehrsraum projiziert wird. Der wesentliche Unterschied zu der Ausführung nach Fig. 1 liegt somit, abgesehen von einem nach dem Auflichtprinzip arbeitenden Lichtkonversionsmittel, im Wegfall des verspiegelten Reflektors 11 der Fig. 1.

In Zusammenhang mit Fig. 5 wird auch ein Beispiel für die Ansteuerung eines Scheinwerfers nach der Erfindung beschrieben. Den Laserlichtquellen 2 ist eine Laseransteuerung 22 zugeordnet, welche zur Stromversorgung sowie zur Überwachung der Laseremission oder z.B. zur Temperaturkontrolle dient und auch zum Modulieren der Intensität der abgestrahlten Laserstrahlen eingerichtet ist. Unter "Modulieren" wird in Zusammenhang mit der vorliegenden Erfindung verstanden, dass die abgestrahlte optische Leistung jeder Laserlichtquelle geändert werden kann, sei es kontinuierlich oder gepulst, im Sinne eines Ein- und Ausschaltens bzw. eines Pulsweiten modulierten Dimmens. Wesentlich ist, dass die Lichtleistung analog dynamisch geändert werden kann, je nachdem, an welcher Winkelposition ein jeweiliger Mikrospiegel steht. Zusätzlich gibt es noch die Möglichkeit des Ein- und Ausschaltens für eine gewisse Zeit, um definierte Stellen nicht zu beleuchten oder im Verkehrsraum gewünschte Bereiche auszublenden. Ein Beispiel eines dynamischen Ansteuerungskonzepts zur Erzeugung eines Bildes durch einen scannenden Laserstrahl, jedoch im Zusammenhang mit einem Scannen über ein rechteckförmiges Feld, ist etwa in der veröffentlichten österreichischen Patentanmeldung A 50454/2013 A1 der Anmelderin beschrieben.

Die Laseransteuerung 22 erhält ihrerseits wiederum Signale von einer zentralen Recheneinheit 23, welcher Sensorsignale sᵢ zugeführt werden können. Diese Signale können einerseits beispielsweise Schaltbefehle zum Umschalten von Fernlicht auf Abblendlicht sein oder andererseits Signale, die beispielsweise von Sensoren, wie Kameras, aufgenommen werden, welche die Beleuchtungsverhältnisse, Umweltbedingungen und/oder Objekte auf der Fahrbahn erfassen. Auch können die Signale von einer Fahrzeug-Fahrzeug-Kommunikationsinformation stammen.

Die Mikrospiegel 6 werden von einer Spiegelansteuerung 24 mit Hilfe von Treibersignalen angesteuert. Sie können im vorliegenden Fall im Allgemeinen um eine Achse schwingen und werden z.B. in Schwingungen konstanter Frequenz versetzt, wobei diese Schwingungen insbesondere den mechanischen Eigenfrequenzen des Mikrospiegels entsprechen können. Auch die Spiegelansteuerung 24 wird von der Recheneinheit 23 gesteuert, um die Schwingungsamplituden der Mikrospiegel 6 einstellen zu können, wobei auch asymmetrisches Schwingen um die jeweilige Achse einstellbar sein kann.

Die Ansteuerung von Mikrospiegeln ist bekannt und kann auf vielerlei Art erfolgen, z.B. elektrostatisch oder elektrodynamisch. Bei elektrostatisch arbeitenden Mikrospiegeln sind relativ hohe Treiberspannungen in der Größenordnung von 150 Volt erforderlich. Die Position der Mikrospiegel 6 kann auch mit Hilfe von Positionssignalen an die Spiegelansteuerung 24 und/oder an die Recheneinheit 23 rückgemeldet werden und somit mit der Laseransteuerung synchronisiert werden. Es sei angemerkt, dass auch andere Strahlablenkmittel, wie z.B. bewegbare Prismen, Verwendung finden können, wenngleich die Verwendung eines Mikrospiegels bevorzugt wird. Die Recheneinheit steht oft mit einem Speicher 25 in Verbindung, der Korrekturwerte oder bestimmte Vorgaben für die Lichtverteilung enthalten kann.

Weiters ist es bei Verwendung dynamischer Optiken 4 möglich, dass diese über Signale sₒ angesteuert werden, um den Strahlquerschnitt zeitabhängig zu ändern, symbolisch an der mit "L" bezeichneten variablen Brennpunktlage erkennbar.

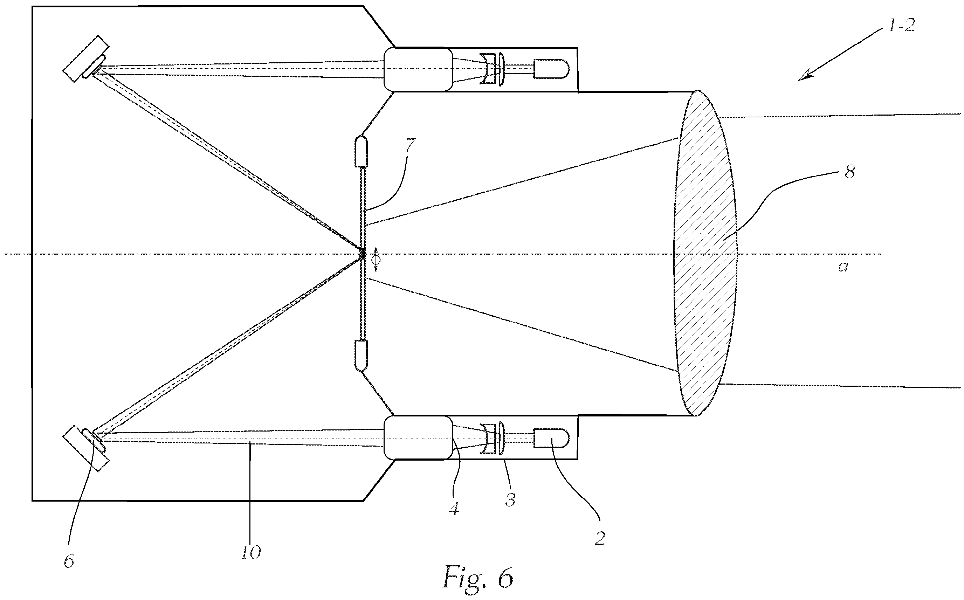

Die in Fig. 6 grob schematisch skizzierte Ausführung eines erfindungsgenäßen Scheinwerfers 1-2 verwendet ebenso wie die Ausführung nach Fig. 1 ein mit Durchlicht arbeitendes Lichtkonversionsmittel 7, doch wird in diesem Fall kein Reflektor - Reflektor 11 bei Fig. 1 - verwendet, sondern die sekundären Laserstrahlen 10 werden über den Laserlichtquellen 2 zugeordnete Mikrospiegel 6 auf das zentral gelegene Lichtkonversionsmittel 7 gelenkt. Das auf/in diesem erzeugte Leuchtbild strahlt nach vorne in Fahrtrichtung ab und wird als Lichtbild mit Hilfe der Abbildungsoptik 8 in den Verkehrsraum projiziert.

Den gezeigten Ausführungsformen ist insgesamt gemeinsam, dass sie einen sehr platzsparenden und im Wesentlichen rotationssymmetrischen Aufbau aufweisen, wodurch sie einem Fahrzeugkonstrukteur hinsichtlich des Platzbedarfs und einer universellen Einsetzbarkeit sehr entgegenkommen.

### Liste der Bezugszeichen

| | | | |
|---|---|---|---|
| 1 | Scheinwerfer | 13 | Lüfter |
| 1-1 | Scheinwerfer | 14 | Luftfilter |
| 1-2 | Scheinwerfer | 15 | Öffnungen |
| 2 | Laserdioden/ Laserlichtquellen | 16 | Öffnungen |
| 3 | Halterung | 17 | Gehäuse |
| 4 | Optik | 18 | Gehäuseabschnitt |
| 5 | hohlzylindrischer Teil | 19 | Hohlraum |
| 6 | Mikrospiegel | 20 | Gehäuseabschnitt |
| 7 | Lichtkonversionsmittel | 21 | Strahlenfalle |
| 7-1 | Lichtkonversionsmittel | 22 | Laseransteuerung |
| 8 | Abbildungsoptik | 23 | Recheneinheit |
| 9 | primärer Laserstrahl | 24 | Spiegelansteuerung |
| 10 | sekundärer Laserstrahl | 25 | Speicher |
| 10-1 | sekundärer Laserstrahl | a | optische Achse |
| 11 | Reflektor | sᵢ | Sensorsignale |
| 12 | tertiärer Laserstrahl | L | variable Brennpunktlagen |

## Patentansprüche

1. Scheinwerfer (1,1-1, 1-2) für Fahrzeuge, mit einer Vielzahl von modulierten Laserlichtquellen (2), einer gleichen Vielzahl von Mikrospiegeln (6), zumindest einem Lichtkonversionsmittel (7,7-1) und einer Abbildungsoptik (8), wobei die von den Laserlichtquellen ausgehenden Laserstrahlen mittels der Mikrospiegel scannend auf das zumindest eine Lichtkonversionsmittel (7, 7-1) lenkbar sind, um an diesem ein Leuchtbild zu erzeugen, welches über die Abbildungsoptik (8) als Lichtbild auf die Fahrbahn projiziert wird, wobei der Scheinwerfer weiter eine Spiegelansteuerung (24) enthält und die Vielzahl von Mikrospiegeln durch die Spiegelansteuerung (24) jeweils in zumindest einer Koordinatenrichtung verschwenkbar sind, wobei der Scheinwerfer ferner eine Laserartsteuerung (22) und eine dieser und der Spiegelansteuerung zugeordnete Recheneinheit (23) enthält, **dadurch gekennzeichnet, dass** zumindest sechs Laserlichtquellen (2) vorhanden sind, welche in Abstand von der optischen Achse (a) der Abbildungsoptik (8) um diese Achse herum verteilt angeordnet sind, jeder Laserlichtquelle ein Mikrospiegel (6) zugeordnet ist, wobei der Laserstrahl jeder Laserlichtquelle über den zugeordneten Mikrospiegel auf das zumindest eine Lichtkonversionsmittel (7, 7-1) gelenkt ist, um auf diesem das Leuchtbild zu erzeugen, und die Mikrospiegel derart um zumindest eine Achse schwingen, dass jeder Laserstrahl eine Scanbewegung in radialer Richtung bezüglich der optischen Achse (a) auf dem Lichtkonversionsmittel ausführt, wobei die Mikrospiegel (6) resonant schwingen und ihre Umkehrpunkte einem vorgegebenen Bereich hoher Lichtstärke im Leuchtbild, insbesondere im Zentrum, zugeordnet sind, sodass auf diesem ein Leuchtbild aus einzelnen Kreissektoren eines polaren Koordinatensystems geschrieben wird, dessen Ursprung auf der optischen Achse (a) der Abbildungsoptik liegt, wobei die Anzahl der Kreissektoren jener der Laserlichtquellen bzw. der Mikrospiegel entspricht und jedem Kreissektoren eine Laserlichtquelle zugeordnet ist.

2. Scheinwerfer (1,1-1, 1-2) nach Anspruch 1, **dadurch gekennzeichnet, dass** die Grenzen der Kreissektoren an Linien, z.B. Hell-Dunkel-Grenzverlauf oder Straßenränder im Verkehrsraum angepasst sind.

3. Scheinwerfer (1,1-1, 1-2) nach Anspruch 1 oder 2, **dadurch gekennzeichnet, dass** die Laserlichtquellen (2) entlang eines Kreises, vorzugsweise rotationssymmetrisch bezüglich der optischen Achse (a) angeordnet sind.

4. Scheinwerfer (1,1-1, 1-2) nach einem der Ansprüche 1 bis 3, **dadurch gekennzeichnet, dass** die Laserlichtquellen (2) in einer zwangsgekühlten, vorzugsweise ringförmigen Halterung (3) angeordnet sind.

5. Scheinwerfer (1,1-1, 1-2) nach einem der Ansprüche 1 bis 4, **dadurch gekennzeichnet, dass** das Lichtkonversionsmittel (7, 7-1) zentral, im Bereich der optischen Achse (a) angeordnet ist.

6. Scheinwerfer (1, 1-2) nach einem der Ansprüche 1 bis 5, **dadurch gekennzeichnet, dass** die Laserspotgröße im Zentrum des Leuchtbildes kleiner ist als für Bereiche mit größerem radialen Abstand von der optischen Achse.

7. Scheinwerfer (1) nach einem der Ansprüche 1 bis 6, **dadurch gekennzeichnet, dass** im Strahlengang zwischen den Laserlichtquellen und den Mikrospiegeln (6) zumindest ein ortsfester Reflektor (11) angeordnet ist.

8. Scheinwerfer (1) nach einem der Ansprüche 1 bis 7, **dadurch gekennzeichnet, dass** das Lichtkonversionsmittel (7) von der Bauart des Durchlichtprinzips ist.

9. Scheinwerfer (1) nach einem der Ansprüche 1 bis 8, **dadurch gekennzeichnet, dass** innerhalb eines Gehäuseabschnittes (20) des Scheinwerfers zumindest eine Strahlenfalle (21) für das Lichtkonversionsmittel (7) unbeabsichtigt durchsetzende Laserstrahlen vorgesehen ist.

10. Scheinwerfer (1) nach einem der Ansprüche 1 bis 9, **dadurch gekennzeichnet, dass** jeder modulierten Laserlichtquelle (2) eine dynamische Optik (4) mit variabler Brennpunktlage zur gesteuerten Veränderung des Strahlquerschnitts nachgeordnet ist.

11. Scheinwerfer (1) nach einem der Ansprüche 1 bis 10, **dadurch gekennzeichnet, dass** das Lichtkonversionsmittel (7, 7-1) strukturiert ist und mehrere, durch ein absorbierendes Material voneinander getrennte Phosphorelemente enthält.

## Claims

1. Headlamp (1, 1-1, 1-2) for vehicles, having a multiplicity of modulated laser light sources (2), an equal multiplicity of micromirrors (6), at least one light conversion means (7, 7-1) and an imaging optical system (8), it being possible for the laser beams emanating from the laser light sources to be directed by means of the micromirrors in a scanning manner onto the at least one light conversion means (7, 7-1) in order to produce a luminous image thereon, which is projected onto the roadway as a light image via the imaging optics (8), the headlamp further containing a mirror drive (24) and the plurality of micromirrors each being pivotable in at least one coordinate direction by the mirror drive (24), the headlamp further containing a laser drive (22) and a computing unit (23) assigned to the laser drive and to the mirror drive
**characterized in that**
at least six laser light sources (2) are present, which are arranged at a distance from the optical axis (a) of the imaging optics (8) and distributed around this axis, a micromirror (6) is associated with each laser light source, the laser beam of each laser light source being directed via the associated micromirror onto the at least one light conversion means (7, 7-1) in order to generate the luminous image thereon, and the micromirrors oscillate about at least one axis in such a way that each laser beam executes a scanning movement in radial direction with respect to the optical axis (a) on the light conversion means, wherein the micromirrors (6) oscillate resonantly and their reversal points are associated with a predetermined region of high luminous intensity in the luminous image, in particular in the center, so that a luminous image is written thereon from individual circle sectors of a polar coordinate system, the origin of which lies on the optical axis (a) of the imaging optics, wherein the number of the circle sectors corresponds to that of the laser light sources or of the micromirrors, respectively, and each circle sector is formed from a polar coordinate system, the origin of which lies on the optical axis (a) of the imaging optics, wherein the number of the circle sectors corresponds to that of the laser light sources or of the micromirrors, respectively, and a laser light source is assigned to each circle sector.

2. Headlamp (1,1-1, 1-2) according to claim 1, **characterized in that** the boundaries of the circle sectors are adapted to lines, e.g. light-dark boundary lines or road edges in the traffic area.

3. Headlamp (1,1-1, 1-2) according to claim 1 or 2, **characterized in that** the laser light sources (2) are arranged along a circle, preferably rotationally symmetrical with respect to the optical axis (a).

4. Headlamp (1,1-1, 1-2) according to one of the claims 1 to 3, **characterized in that** the laser light sources (2) are arranged in a positively cooled, preferably annular holder (3) are arranged.

5. Headlamp (1,1-1, 1-2) according to one of the claims 1 to 4, **characterized in that** the light conversion means (7, 7-1) is arranged centrally, in the region of the optical axis (a).

6. Headlamp (1, 1-2) according to one of the claims 1 to 5, **characterized in that** the laser spot size in the center of the luminous image is smaller than for areas with greater radial distance from the optical axis.

7. Headlamp (1) according to one of claims 1 to 6, **characterized in that** at least one fixed reflector (11) is arranged in the beam path between the laser light sources and the micromirrors (6).

8. Headlamp (1) according to one of claims 1 to 7, **characterized in that** the light conversion means (7) is of the transmitted light type.

9. Headlamp (1) according to one of claims 1 to 8, **characterized in that** at least one beam trap (21) for laser beams unintentionally passing through the light conversion means (7) is provided within a housing section (20) of the headlamp.

10. Headlamp (1) according to one of claims 1 to 9, **characterized in that** a dynamic optical system (4) with variable focal point position for controlled variation of the beam cross section is arranged downstream of each modulated laser light source (2).

11. Headlamp (1) according to any one of claims 1 to 10, **characterized in that** the light conversion means (7, 7-1) is structured and contains a plurality of phosphor elements separated from one another by an absorbing material.

## Revendications

1. Projecteur (1, 1-1, 1-2) de véhicule, comprenant une pluralité de sources de lumière laser modulées (2), une même pluralité de micromiroirs (6), au moins un moyen de conversion de lumière (7, 7-1) et une optique d'imagerie (8), les rayons laser issus des sources de lumière laser pouvant être dirigés par balayage au moyen des micromiroirs sur le au moins un moyen de conversion de lumière (7, 7-1) afin de produire sur celui-ci une image lumineuse, qui est projetée sur la chaussée sous forme d'image lumineuse par l'intermédiaire de l'optique de reproduction (8), le projecteur contenant en outre une commande de miroir (24) et la pluralité de micromiroirs pouvant être pivotée par la commande de miroir (24) respectivement dans au moins une direction de coordonnées, le projecteur contenant en outre une commande de laser (22) et une unité de calcul (23) associée à celle-ci et à la commande de miroir,
**caractérisé en ce que**
il y a au moins six sources de lumière laser (2) qui sont réparties à distance de l'axe optique (a) de l'optique de reproduction (8) autour de cet axe, un micromiroir (6) est associé à chaque source de lumière laser, le rayon laser de chaque source de lumière laser étant dirigé par le micromiroir associé sur le au moins un moyen de conversion de lumière (7, 7-1) pour produire l'image lumineuse sur celui-ci, et les micromiroirs oscillent ainsi autour d'au moins un axe, que chaque rayon laser effectue un mouvement de balayage en direction radiale par rapport à l'axe optique (a) sur le moyen de conversion de lumière, les micromiroirs (6) oscillant de manière résonante et leurs points d'inversion étant associés à une zone prédéfinie de grande intensité lumineuse dans l'image lumineuse, en particulier au centre, de sorte qu'une image lumineuse est écrite sur celle-ci à partir de différents secteurs circulaires d'un système de coordonnées polaire dont l'origine se trouve sur l'axe optique (a) de l'optique de reproduction, le nombre de secteurs circulaires correspondant à celui des sources de lumière laser ou des moyens de conversion de lumière, des micro-miroirs et une source de lumière laser est associée à chaque secteur circulaire.

2. Projecteur (1, 1-1, 1-2) selon la revendication 1, **caractérisé en ce que** les limites des secteurs circulaires sont adaptées à des lignes, par exemple à des lignes de démarcation clair-obscur ou à des bords de route dans l'espace de circulation.

3. Projecteur (1,1-1, 1-2) selon la revendication 1 ou 2, **caractérisé en ce que** les sources de lumière laser (2) sont disposées le long d'un cercle, de préférence avec une symétrie de révolution par rapport à l'axe optique (a).

4. Projecteur (1,1-1, 1-2) selon l'une des revendications 1 à 3, **caractérisé en ce que** les sources lumineuses laser (2) sont disposées dans un support (3) à refroidissement forcé, de préférence annulaire.

5. Projecteur (1, 1-1, 1-2) selon l'une des revendications 1 à 4, **caractérisé en ce que** le moyen de conversion de lumière (7, 7-1) est disposé au centre, dans la zone de l'axe optique (a).

6. Projecteur (1, 1-2) selon l'une des revendications 1 à 5, **caractérisé en ce que** la taille du spot laser au centre de l'image lumineuse est inférieure à celle des zones situées à une distance radiale plus grande de l'axe optique.

7. Projecteur (1) selon l'une des revendications 1 à 6, **caractérisé en ce qu'**au moins un réflecteur fixe (11) est disposé sur le trajet du faisceau entre les sources de lumière laser et les micromiroirs (6).

8. Projecteur (1) selon l'une des revendications 1 à 7, **caractérisé en ce que** le moyen de conversion de lumière (7) est du type à lumière transmise.

9. Projecteur (1) selon l'une des revendications 1 à 8, **caractérisé en ce qu'**il est prévu, à l'intérieur d'une partie (20) du boîtier du projecteur, au moins un piège à rayons (21) pour les rayons laser qui traversent involontairement le moyen de conversion de lumière (7).

10. Projecteur (1) selon l'une des revendications 1 à 9, **caractérisé en ce que** chaque source de lumière laser modulée (2) est suivie d'une optique dynamique (4) à position focale variable pour la modification commandée de la section transversale du faisceau.

11. Projecteur (1) selon l'une des revendications 1 à 10, **caractérisé en ce que** le moyen de conversion de lumière (7, 7-1) est structuré et contient plusieurs éléments phosphorescents séparés les uns des autres par un matériau absorbant.
